# EUROPÄISCHE PATENTSCHRIFT

(11) **EP 0 703 652 B1**
(45) Veröffentlichungstag und Bekanntmachung des Hinweises auf die Patenterteilung: **03.06.1998**
(21) Anmeldenummer: 95113859.3
(22) Anmeldetag: 04.09.1995
(51) Int. Cl.: H02J 3/46, H02M 7/48

(54) **Verfahren und Einrichtung zur variablen Zuteilung von in Betrieb stehenden Umrichtern auf mindestens eine Last**
Method and device for variable allocation of an operating inverter to at least one load
Méthode et appareil pour une allocation variable d'un convertiseur en fonctionemment avec au moins une charge

(30) Priorität: 21.09.1994 CH 2880/94
(43) Veröffentlichungstag der Anmeldung: 27.03.1996
(73) Patentinhaber: INVENTIO AG, CH-6052 Hergiswil (CH)
(72) Erfinder: Schaal, Christian, Dipl.-Ing., CH-8305 Dietlikon (CH)

(56) Entgegenhaltungen:
- EP-A- 0 600 312
- WO-A-92/09137
- US-A- 4 150 425
- PATENT ABSTRACTS OF JAPAN vol. 9, no. 61 (E-303) (1784) 19 March 1985 & JP-A-59 198 878 (SANYO DENKI K.K.) 10 November 1984
- IEEE TRANSACTIONS ON INDUSTRY APPLICATIONS, vol.24, no.2, March 1988, NEW YORK US pages 281 - 287 T.KAWABATA ET AL 'PARALLE OPERATION OF VOLTAGE SOURCE INVENTERS'

## Beschreibung

Die Erfindung betrifft ein Verfahren und eine Einrichtung zur variablen Zuteilung von in Betrieb stehenden Umrichtern auf mindestens eine zu speisende Last, wobei die Lastanteile der parallel geschalteten Umrichter von einer Regelung bestimmt werden.

Mit der Patentschrift CH 682 531 ist ein Verfahren bekanntgeworden, welches erlaubt, eine Last speisende Umrichter parallel zu schalten. Eine Hauptregelung bestimmt aus dem Vergleich des Gesamtausgangsstromes der parallelgeschalteten Umrichter mit dem Sollwert, wann die oberen und unteren Schalter aller Teilumrichter gesamthaft ein- bzw. ausgeschaltet werden müssen. Dieser Schaltzeitpunkt wird den einzelnen Umrichtern als Sollwert vorgegeben. Jeder Umrichter besitzt die Kompetenz, den exakten Zeitpunkt für seine Schalter in einem kleinen Bereich, einem Zeitfenster, selbst zu variieren und so einen Stromausgleich herbeizuführen. Defekte Einheiten können während des Betriebs aus dem Verband herausgetrennt werden. Es können auch Umrichter während des Betriebs zu- und weggeschaltet werden, um eine Anpassung an verschiedene Lastzustände zu erreichen.

Beim vorstehend beschriebenen Verfahren werden Umrichter parallelgeschaltet, um eine Last zu speisen. Durch das Zeitfenster ist die Möglichkeit gegeben, dass entsprechende Schalter vor dem Zeitnullpunkt schliessen bzw. nach dem Zeitnullpunkt öffnen. Dadurch wird ein heisser Pfad zwischen den entsprechenden Schaltern der Teilumrichter gebildet. Ein von der Last weggeschalteter Umrichter kann nicht zur Speisung einer weiteren Last verwendet werden.

Hier will die Erfindung Abhilfe schaffen. Die Erfindung, wie sie in den Ansprüchen gekennzeichnet ist, löst die Aufgabe, die Nachteile der bekannten Einrichtung zu vermeiden und ein Verfahren und eine Einrichtung zu schaffen, bei denen ein Wegschalten bzw. Zuschalten mindestens eines in Betrieb stehenden Umrichters von einer bzw. zu einer Last stromlos erfolgt.

Die durch die Erfindung erreichten Vorteile sind im wesentlichen darin zu sehen, dass eine übergeordnete Steuerung oder Regelung eine variable Zuteilung von beliebigen Umrichtern oder Umrichtergruppen auf eine oder mehrere Lasten ermöglicht. Das bedeutet, dass ein Umrichter während des Betriebes von einer Last auf eine andere Last geschaltet werden kann. Im weiteren kann ein defekter oder zu wartender Umrichter ohne Betriebsunterbruch von der Last abgetrennt und durch einen anderen Umrichter ersetzt werden. Damit wird eine erhöhte Betriebssicherheit, eine uneingeschränkte Verfügbarkeit und eine einfache Wartung der gesamten Umrichteranlage gewährleistet. Vorteilhaft ist auch, dass die zu installierende Umrichterleistung gegenüber einem herkömmlichen System reduziert werden kann, falls die einzelnen Lasten ihre volle Leistung nicht gleichzeitig beanspruchen. Weiter vorteilhaft ist, dass die Schalterbeanspruchung reduziert wird, da im Schaltmoment kein Strom fliesst und dass die Ausgleichsregelung durch den Schaltvorgang nicht gestört wird.

Im folgenden wird die Erfindung anhand von lediglich einen Ausführungsweg darstellenden Zeichnungen näher erläutert.
Es zeigen:
- Fig. 1: eine schematische Darstellung der erfindungsgemässen Umrichteranlage,
- Fig. 2: ein Blockschaltbild einer Umrichteranlage mit drei Umrichtern und zwei Lasten,
- Fig. 3: eine Phase einer dreiphasigen Signalverzögerungseinheit der Umrichteranlage gemäss Fig. 2,
- Fig. 4: eine Phase einer dreiphasigen Ansteuereinheit der Umrichteranlage gemäss Fig. 2,
- Fig. 5: Einzelheiten einer 6-Puls-Brücke der Umrichteranlage gemäss Fig. 2,
- Fig. 6: eine Phase eines dreiphasigen Gesamtstromreglers der Umrichteranlage gemäss Fig. 2,
- Fig. 7: eine Phase eines dreiphasigen Ausgleichsreglers der Umrichteranlage gemäss Fig. 2,
- Fig. 8: eine Phase eines dreiphasigen Modulators der Umrichteranlage gemäss Fig. 2,
- Fig. 9: ein Blockschaltbild einer in den Reglern der Figuren 6 und 7 eingesetzten Reglereinheit,
- Fig. 10: ein Flussdiagramm zur Darstellung eines Wegschaltvorganges eines Umrichters von einer Last und
- Fig. 11: ein Flussdiagramm zur Darstellung eines Zuschaltvorganges eines Umrichters zu einer Last.

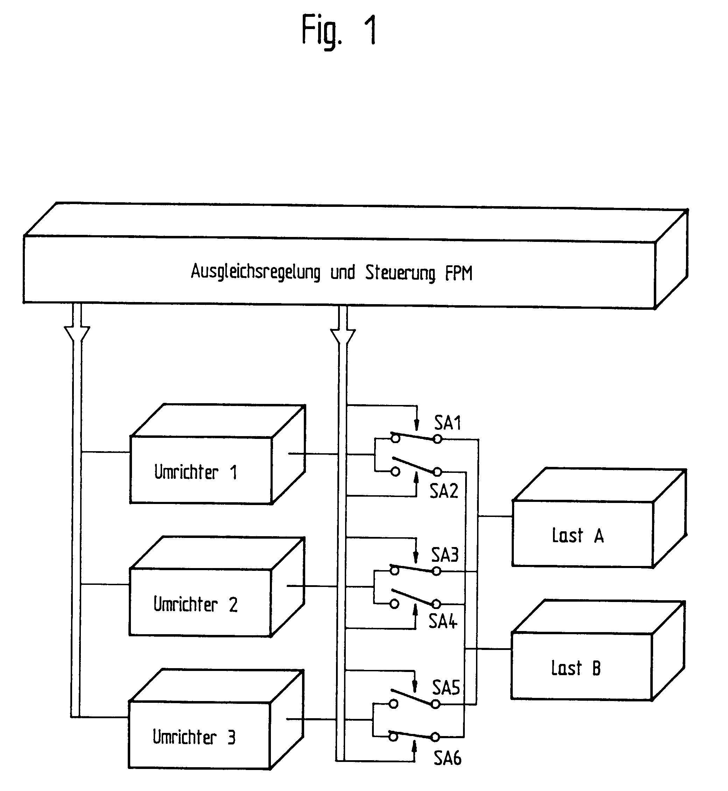

Figur 1 zeigt eine Umrichteranlage, bei der eine variable Zuteilung von mindestens einem Umrichter oder mindestens einer Umrichtergruppe auf mindestens eine Last durchführbar ist. Das Blockschaltbild in Figur 1 zeigt eine Umrichteranlage mit drei Umrichtern 1, 2, 3, Schaltmitteln SA1 ... SA6 und zwei Lasten A, B. Die Steuerung einer solchen Umrichteranlage ist im folgenden mit Flexible Power Management FPM bezeichnet.

Ein solches Umrichtersystem hat gegenüber einem konventionellen System, bei dem jede Last fest mit ihrem eigenen Umrichter verbunden ist, zahlreiche Vorteile: Falls in Figur 1 Umrichter 3 ausfällt, wird er durch Öffnen von Schalter SA6 von der Last B abgetrennt. Anschliessend kann durch Öffnen von Schalter SA3 und Schliessen von Schalter SA4 die Stromversorgung von Last B wieder gewährleistet werden. Allerdings hat Last A dann nur noch die Leistung von einem Umrichter zur Verfügung. In einem grossen System mit vielen Umrichtern fällt ein allfälliger zusätzlicher Reserveumrichter, welcher im Normalbetrieb nicht gebraucht wird, nicht gross ins Gewicht. Man hat dann aber den Vorteil, dass auch beim Ausfall eines Umrichters der Normalbetrieb voll aufrecht erhalten werden kann. Dadurch, dass ein Umrichter aus dem System herausgetrennt und durch einen anderen Umrichter im System ersetzt werden kann, wird die Wartung vereinfacht und verbessert. Muss ein Umrichter gewartet werden, so ist es deswegen nicht wie in einem konventionellen System nötig, dieses stillzulegen, nur weil ein Antrieb im System nicht betriebsfähig ist. In einem grossen System mit Reserveumrichter ist es wie oben möglich, den Normalbetrieb voll aufrecht zu erhalten. Unter der Annahme, dass die Lasten A, B im Blockschaltbild der Figur 1 im Normalbetrieb die Leistung von einem Umrichter und nur selten, zum Beispiel zum Beschleunigen, die Leistung von zwei Umrichtern brauchen, so reichen die drei Umrichter von Figur 1 aus, wenn durch eine Steuerung oder vom System her garantiert ist, dass die Lasten ihre Spitzenleistung nicht gleichzeitig brauchen. In einem konventionellen System müsste die Leistung von vier Umrichtern installiert werden. Der Effekt der Reduktion der zu installierenden Umrichterleistung wird umso grösser, je grösser das System ist und je grösser die Unterschiede zwischen dem Leistungsbedarf im Normalbetrieb und dem Maximalleistungsbedarf sind.

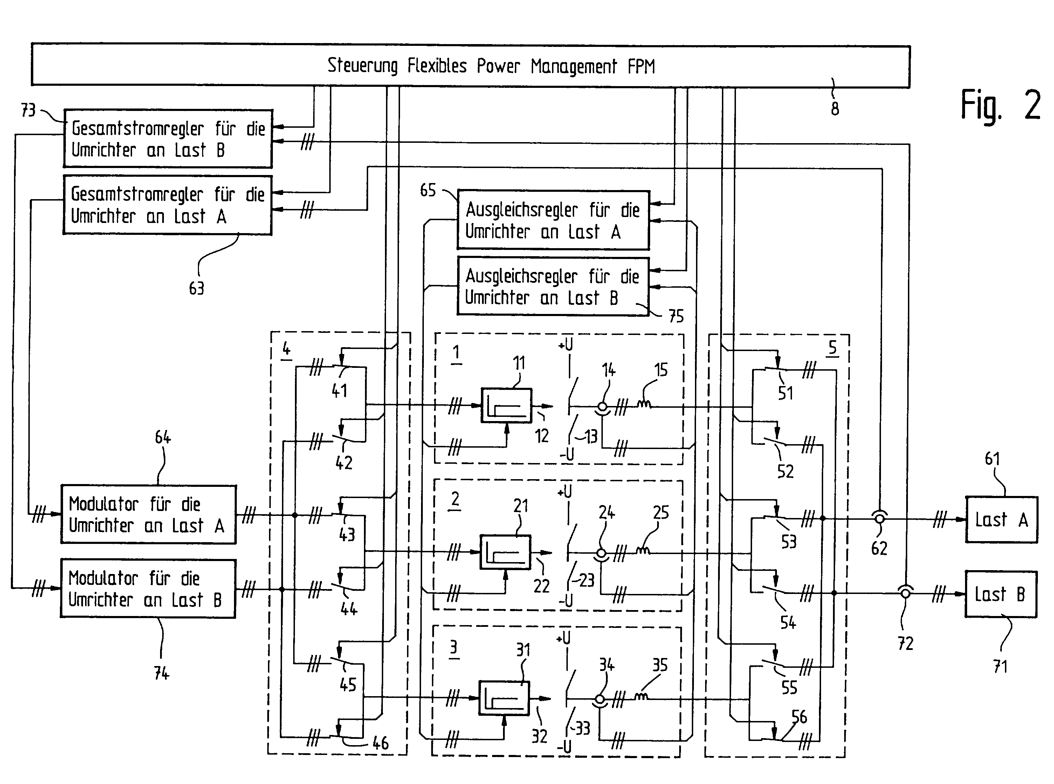

Figur 2 zeigt ein ausführlicheres Blockschaltbild eines Systems mit drei Umrichtern und zwei Lasten A, B. Umrichter 1 besteht aus einer dreiphasigen Signalverzögerungseinheit 11, welche als Stellglied für die Ausgleichsregelung benötigt wird, einer dreiphasigen Ansteuereinheit 12, welche die Totzeit und die Potentialtrennung realisiert, einer 6-Puls-Brücke 13 aus abschaltbaren Halbleitern und Freilaufdioden, einem Strommessglied 14, welches die Ströme der drei Phasen und somit die Istwerte für die Ausgleichsregelung erfasst und Anschlussdrosseln 15 für jede Phase. Umrichter 2 besteht aus einer dreiphasigen Signalverzögerungseinheit 21, welche als Stellglied für die Ausgleichsregelung benötigt wird, einer dreiphasigen Ansteuereinheit 22, welche die Totzeit und die Potentialtrennung realisiert, einer 6-Puls-Brücke 23 aus abschaltbaren Halbleitern und Freilaufdioden, einem Strommessglied 24, welches die Ströme der drei Phasen und somit die Istwerte für die Ausgleichsregelung erfasst und Anschlussdrosseln 25 für jede Phase. Umrichter 3 besteht aus einer dreiphasigen Signalverzögerungseinheit 31, welche als Stellglied für die Ausgleichsregelung benötigt wird, einer dreiphasigen Ansteuereinheit 32, welche die Totzeit und die Potentialtrennung realisiert, einer 6-Puls-Brücke 33 aus abschaltbaren Halbleitern und Freilaufdioden, einem Strommessglied 34, welches die Ströme der drei Phasen und somit die Istwerte für die Ausgleichsregelung erfasst und Anschlussdrosseln 35 für jede Phase. Über einen Eingangsverteiler 4 und einen Ausgangsverteiler 5, die beide als Kreuzschienenverteiler ausgebildet sind, lässt sich jeder der drei Umrichter 1, 2, 3 der Last A, im Blockschaltbild mit 61 bezeichnet, der Last B, im Blockschaltbild mit 71 bezeichnet oder gar keiner Last zuordnen. Bei den Kreuzschienenverteilern 4, 5 sind elektromechanische oder elektronische Schaltmittel vorgesehen. Sind die dreipoligen Schalter 41 und 51 geschlossen und die dreipoligen Schalter 42 und 52 geöffnet, so ist Umrichter 1 der Last A zugeordnet. Sind die dreipoligen Schalter 41 und 51 geöffnet und die dreipoligen Schalter 42 und 52 geschlossen, so ist Umrichter 1 der Last B zugeordnet. Sind die Schalter 51 und 52 geöffnet, so ist Umrichter 1 keiner Last zugeordnet. Sind die dreipoligen Schalter 43 und 53 geschlossen und die dreipoligen Schalter 44 und 54 geöffnet, so ist Umrichter 2 der Last A zugeordnet. Sind die dreipoligen Schalter 43 und 53 geöffnet und die dreipoligen Schalter 44 und 54 geschlossen, so ist Umrichter 2 der Last B zugeordnet. Sind die Schalter 53 und 54 geöffnet, so ist Umrichter 2 keiner Last zugeordnet. Sind die dreipoligen Schalter 45 und 55 geschlossen und die dreipoligen Schalter 46 und 56 geöffnet, so ist Umrichter 3 der Last A zugeordnet. Sind die dreipoligen Schalter 45 und 55 geöffnet und die dreipoligen Schalter 46 und 56 geschlossen, so ist Umrichter 3 der Last B zugeordnet. Sind die Schalter 55 und 56 geöffnet, so ist Umrichter 3 keiner Last zugeordnet. Ein Strommessglied 62 misst die in die Last A fliessenden Gesamtströme in allen drei Phasen und somit die Istwerte für die Gesamtstromregelung der der Last A zugeordneten Umrichter. Ein Stromregler 63 ist für die Regelung der Gesamtströme in allen drei Phasen der der Last A zugeordneten Umrichter zuständig. Ein Modulator 64 erzeugt aufgrund der Vorgaben des Gesamtstromreglers 63 die Ansteuersignale der drei Phasen für die der Last A zugeordneten Umrichter und ist somit das Stellglied für die Gesamtstromregelung der der Last A zugeordneten Umrichter. Ein Ausgleichsregler 65 ist für die Regelung der Stromverteilung unter den der Last A zugeordneten Umrichtern in allen drei Phasen zuständig.

Die Steuerung FPM liefert dem Ausgleichsregler 65 eine Angabe darüber, welche der Umrichter 1, 2, 3 der Last A zugeordnet sind und für die zugeordneten Umrichter eine Angabe über den von ihnen zu liefernden Anteil an den Gesamtströmen in allen drei Phasen. Mit Hilfe dieser Angaben berechnet der Ausgleichsregler 65 aus den Stromistwerten der Strommessglieder 14, 24, 34 die Stromsollwerte für die der Last A zugeordneten Umrichter. Diese Stromsollwerte werden mit den Stromistwerten verglichen und daraus ein Steuersignal erzeugt.

Ein Strommessglied 72 misst die in die Last B fliessenden Gesamtströme in allen drei Phasen und somit die Istwerte für die Gesamtstromregelung der der Last B zugeordneten Umrichter. Ein Stromregler 73 ist für die Regelung der Gesamtströme in allen drei Phasen der der Last B zugeordneten Umrichter zuständig. Ein Modulator 74 erzeugt aufgrund der Vorgaben des Gesamtstromreglers 73 die Ansteuersignale der drei Phasen für die der Last B zugeordneten Umrichter und ist somit das Stellglied für die Gesamtstromregelung der der Last B zugeordneten Umrichter. Ein Ausgleichsregler 75 ist für die Regelung der Stromverteilung unter den der Last B zugeordneten Umrichter in allen drei Phasen zuständig.

Die Steuerung FPM liefert dem Ausgleichsregler 75 eine Angabe darüber, welche der Umrichter 1, 2, 3 der Last B zugeordnet sind und für die zugeordneten Umrichter eine Angabe über den von ihnen zu liefernden Anteil an den Gesamtströmen in allen drei Phasen. Mit Hilfe dieser Angaben berechnet der Ausgleichsregler 75 aus den Stromistwerten der Strommessglieder 14, 24, 34 die Stromsollwerte für die der Last B zugeordneten Umrichter. Diese Stromsollwerte werden mit den Stromistwerten verglichen und daraus ein Steuersignal erzeugt.

Die Steuerung Flexible Power Management FPM, in Figur 2 mit 8 bezeichnet, ist für die Stromsollwertvorgabe und für die Steuerung des Umrichtersystems verantwortlich.

Anhand von Figur 2 soll nun das erfindungsgemässe Verfahren für eine variable Zuteilung von Umrichtern oder Umrichtergruppen zu einer oder mehreren Lasten während des Betriebs anhand eines konkreten Beispiels erläutert werden. Die Zuteilung der Umrichter oder Umrichtergruppen kann entweder aufgrund des gemessenen Strombedarfs der Lasten, aufgrund des durch die Ansteuerung der Lasten zu erwartenden Strombedarfs oder aufgrund der momentanen Verfügbarkeit der Umrichter oder Umrichtergruppen erfolgen. Als Ausgangslage seien die Schalter im Eingangskreuzschienenverteiler 4 und im Ausgangskreuzschienenverteiler 5 so gestellt, wie in Figur 2 gezeigt. Umrichter 1 und 2 sind bei diesen Schalterstellungen beide der Last A zugeordnet. Mit dem Ausgleichsregler 65 wird die gewünschte Stromverteilung unter Umrichter 1 und 2 in allen drei Phasen bewerkstelligt. Bei gleich leistungsfähigen Umrichtern wird Umrichter 1 und 2 in der Regel je 50% des in die Last A fliessenden Stromes übernehmen. Umrichter 3 ist der Last B zugeordnet.

Der Wegschaltvorgang und der Zuschaltvorgang ist untenstehend anhand eines Beispiels, in dem der Umrichter 2 von der Last A weggeschaltet und an die Last B zugeschaltet wird, näher erläutert:

### Wegschaltvorgang:

Zuerst wird von der Steuerung FPM der neue Maximalstrom bestimmt, welcher sich dadurch ergibt, dass nach dem Wegschalten von Umrichter 2 nur noch ein Umrichter anstatt wie vorher zwei Umrichter der Last A zugeteilt sind. Der Stromsollwert des Gesamtstromreglers 63 darf nur kleiner oder gleich diesem Maximalstrom sein. Erst wenn die Gesamtströme in allen drei Phasen der Last A unterhalb des neuen Maximalstromes liegen, was durch eine ausreichende Wartezeit, durch eine variable Wartezeit, welche abläuft, sobald durch eine Messung in allen drei Phasen ein Strom unterhalb dieses Maximalstromes festgestellt wurde, oder durch eine Kombination der beiden Verfahren erreicht wird, werden die Ströme in allen drei Phasen von Umrichter 2 mit dem Ausgleichsregler 65 für die Umrichter an der Last A auf Null geregelt. Umrichter 2 soll also 0% des in die Last A fliessenden Stromes übernehmen und Umrichter 1 100%, was durch geeignete Vorgaben für den Ausgleichsregler 65 erreicht wird. Dies ist die Voraussetzung, dass Umrichter 2 während des Wegschaltvorganges keinen Strom liefert.

Erst wenn die Ströme in allen drei Phasen von Umrichter 2 zu Null geworden sind, was wiederum durch eine ausreichende Wartezeit, durch eine variable Wartezeit, welche abläuft, sobald durch eine Messung in allen drei Phasen Strom Null festgestellt wurde, oder durch eine Kombination der beiden Verfahren erreicht wird, wird der Befehl zum Öffnen des dreipoligen Schalters 53 gegeben.

Nach Ablauf der Abfallzeit des Schalters 53 ist Umrichter 2 von der Last A abgetrennt und gehört daher nicht mehr zu den der Last A zugeordneten Umrichtern. Daher muss dann Umrichter 2 vom Ausgleichsregler 65, welcher für die Regelung der Stromverteilung unter den der Last A zugeordneten Umrichtern in allen drei Phasen zuständig ist, nicht mehr berücksichtigt werden.

Der Wegschaltvorgang ist hiermit beendet. Nun folgt der Zuschaltvorgang.

### Zuschaltvorgang:

Zuerst muss der dreipolige Schalter 43 geöffnet und der dreipolige Schalter 44 geschlossen werden.

Anschliessend werden die Ströme in allen drei Phasen von Umrichter 2 mit dem Ausgleichsregler 75 auf Null geregelt. Umrichter 2 soll also 0% des in die Last B fliessenden Stromes übernehmen und Umrichter 3 100%, was durch geeignete Vorgaben für den Ausgleichsregler 75 erreicht wird. Dies ist die Voraussetzung, dass Umrichter 2 während des Zuschaltvorganges keinen Strom liefert.

Dann wird der Befehl zum Schliessen des Schalters 54 gegeben.

Nach Ablauf der Anzugszeit des Schalters 54 ist Umrichter 2 an die Last B angeschlossen und gehört daher zu den der Last B zugeordneten Umrichtern. Daher kann nun mit dem Ausgleichsregler 75 die gewünschte Stromverteilung unter Umrichter 2 und 3 in allen drei Phasen bewerkstelligt werden. Bei gleich leistungsfähigen Umrichtern wird Umrichter 2 und 3 in der Regel je 50% des in die Last B fliessenden Stromes übernehmen.

Wenn die gewünschte Stromverteilung erreicht worden ist, was durch eine ausreichende Wartezeit, durch eine variable Wartezeit, welche abläuft, sobald durch eine Messung in allen drei Phasen die gewünschte Stromverteilung festgestellt wurde, oder durch eine Kombination der beiden Verfahren erreicht wird, gilt für den Stromsollwert des Gesamtstromreglers 73 ein neuer Maximalstrom, welcher sich dadurch ergibt, dass nun neu zwei Umrichter anstatt nur einer der Last B zugeordnet sind.

Handelt es sich bei einem wegzuschaltenden Umrichter um den letzten noch an der Last hängenden und somit um den einzigen dieser Last zugeordneten Umrichter, so kann der oben beschriebene Wegschaltvorgang eines Umrichters vereinfacht werden:

Zuerst werden mit dem der Last zugeordneten Gesamtstromregler die Ströme in allen drei Phasen auf Null geregelt. Dies ist die Voraussetzung, dass der Umrichter während des Wegschaltvorganges keinen Strom liefert.

Erst wenn die Ströme in allen drei Phasen der Last zu Null geworden sind, was durch eine ausreichende Wartezeit, durch eine variable Wartezeit, welche abläuft, sobald durch eine Messung in allen drei Phasen Strom Null festgestellt wurde, oder durch eine Kombination der beiden Verfahren erreicht wird, wird der Befehl zum Öffnen des Schalters zwischen der Last und dem Umrichter gegeben. Nach Ablauf der Abfallzeit des Schalters ist der Umrichter von der Last abgetrennt.

Handelt es sich bei einem zuzuschaltenden Umrichter um den ersten an eine Last zu schaltenden und somit nach dem Zuschalten um den einzigen dieser Last zugeordneten Umrichter, so kann der oben beschriebene Zuschaltvorgang eines Umrichters vereinfacht werden:

Zuerst werden die Ströme in allen drei Phasen von diesem Umrichter mit dem Gesamtstromregler der Last, welcher der Umrichter zugeordnet werden soll, auf Null geregelt. Dies ist die Voraussetzung, dass der Umrichter während des Zuschaltvorganges keinen Strom liefert.

Dann wird der Befehl zum Schliessen des Schalters zwischen der Last und dem Umrichter gegeben. Nach Ablauf der Anzugszeit des Schalters ist der Umrichter an die Last angeschlossen. Daher kann dann dem Gesamtstromregler der neue Maximalwert mitgeteilt werden, welcher sich dadurch ergibt, dass nun neu ein Umrichter anstatt keiner der Last zugeteilt ist.

Das Schalten mit Strom Null hat zwei entscheidende Vorteile:
1. Da im Schaltmoment kein Strom fliesst, wird bei mechanischen Schaltern der Kontaktabbrand drastisch reduziert. Die Baugrösse der mechanischen Schalter verringert sich, da die Ströme nur geleitet und nicht geschaltet werden müssen. Bei elektronischen Schaltern verkleinert sich aus dem gleichen Grund das Beschaltungsnetzwerk.
2. Dadurch, dass die Ausgleichsregelung den Strom des weg- oder zuzuschaltenden Umrichters unmittelbar vor-, während und unmittelbar nach dem Schaltvorgang auf Null regelt, wird sie selbst durch den Schaltvorgang nicht gestört, d.h. es gibt keine störende Abweichung zwischen Soll- und Istwert für den weggeschalteten Umrichter nach dem Wegschalten und den zuzuschaltenden Umrichter vor dem Zuschalten.

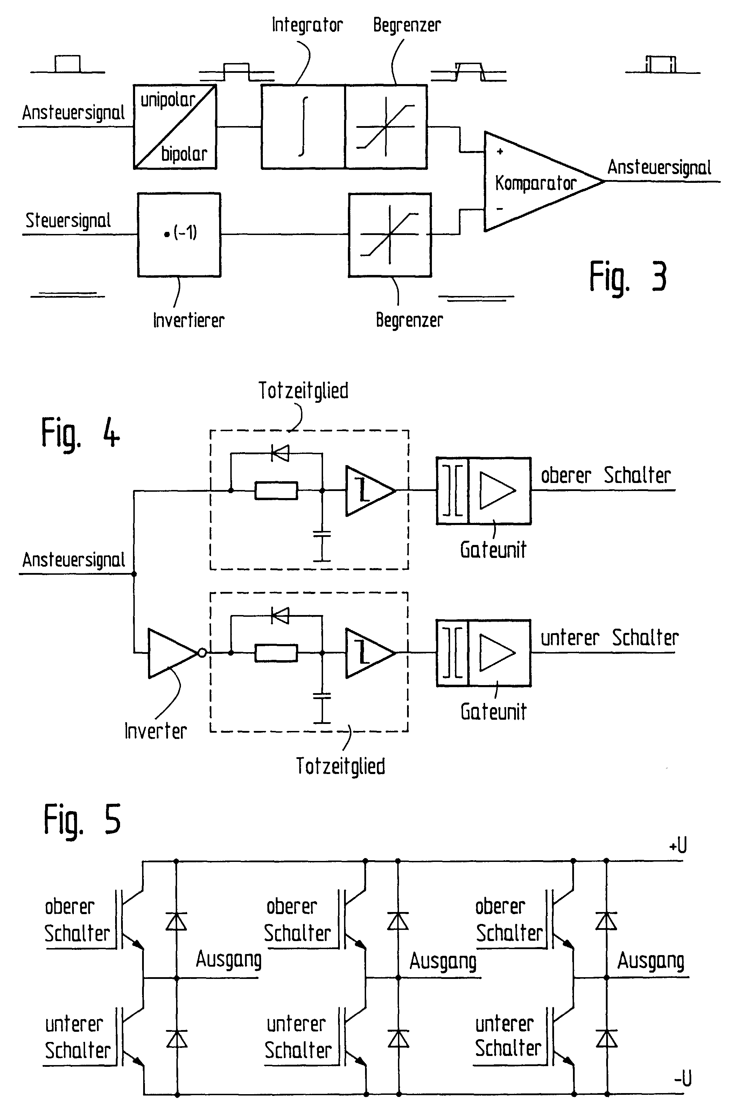

Figur 3 zeigt ein Blockschaltbild einer Phase der in der Umrichteranlage der Figur 2 eingesetzten dreiphasigen Signalverzögerungseinheit 11, 21, 31. Die Flanken des Ansteuersignales für den Umrichter werden mittels der Signalverzögerungseinheit 11, 21, 31 zeitlich verschoben. Das Ansteuersignal ist ein Logiksignal. Logisch 0 bedeutet, dass der untere Halbleiterschalter eingeschaltet ist, logisch 1, dass der obere Halbleiterschalter der 6-Puls-Brücke 13, 23, 33 eingeschaltet ist. Der Unterschied zwischen dem Ansteuersignal des Modulators 64, 74 am Eingang und dem Ansteuersignal am Ausgang besteht darin, dass die Flanken des Ausgangssignals gegenüber den Flanken des Eingangssignals leicht verzögert sind. Die Grösse der Verzögerung lässt sich mit einem zweiten Eingangssignal, dem Steuersignal des Ausgleichsreglers 65, 75 beeinflussen. Es handelt sich dabei um ein Analogsignal. Ist das Steuersignal positiv, so wird die positive Flanke des Ansteuersignals weniger und die negative Flanke mehr verzögert als bei Steuersignal Null. Die Zeit, während der das Ansteuersignal logisch 1 ist, wird also etwas vergrössert. Bei negativem Steuersignal sind die Verhältnisse genau umgekehrt.

Figur 4 zeigt ein Blockschaltbild einer Phase der in der Umrichteranlage der Figur 2 eingesetzten dreiphasigen Ansteuereinheit 12, 22, 32. Die Ansteuereinheit 12, 22, 32 umfasst die beiden Funktionsblöcke Totzeitgenerierung mit Totzeitgliedern und Gateunit.

### Totzeitgenerierung:

Das als Eingangssignal der Totzeitgenerierung dienende Ansteuersignal der Signalverzögerungseinheit 11, 21, 31 ist ein Logiksignal. Logisch 0 bedeutet, dass der untere Halbleiterschalter eingeschaltet ist, logisch 1, dass der obere Halbleiterschalter der 6-Puls-Brücke 13, 23, 33 eingeschaltet ist. Die Totzeitgenerierung erzeugt zwei Ausgangssignale, eines für den oberen und eines für den unteren Halbleiterschalter. Die Ausgangssignale sind Logiksignale. Logisch 0 soll bedeuten, dass der entsprechende Halbleiterschalter ausgeschaltet ist, logisch 1, dass der entsprechende Halbleiterschalter eingeschaltet ist. Die Aufgabe der Totzeitgenerierung ist es, dafür zu sorgen, dass stets nur einer der beiden Halbleiterschalter eingeschaltet ist und dass zwischen dem Ausschalten des einen und dem Einschalten des anderen eine gewisse Zeit eingehalten wird, während der beide ausgeschaltet sind. Schaltungstechnisch besteht die Totzeitgenerierung je Schalter aus einem Totzeitglied, das die positiven und die negativen Schaltflanken des Ansteuersignales zeitlich unterschiedlich beeinflusst, wobei das Ansteuersignal für den unteren Schalter mittels eines Inverters vorzeichenmässig vorbereitet wird.

### Gateunit:

Das Eingangssignal der Gateunit ist ein Logiksignal. Logisch 0 soll bedeuten, dass der entsprechende Halbleiterschalter ausgeschaltet ist, logisch 1, dass der entsprechende Halbleiterschalter eingeschaltet ist. Das Ausgangssignal der Gateunit ist ein Analogsignal, das geeignet ist, die entsprechenden Halbleiterschalter über ihre Steuerelektrode ein- und auszuschalten. In der Gateunit findet die galvanische Trennung zwischen Logik und Leistungskreis und die Umwandlung des Logiksignals in das geeignete Analogsignal statt.

Figur 5 zeigt ein Blockschaltbild der in der Umrichteranlage der Figur 2 eingesetzten 6-Puls-Brücke 13, 23, 33. Der Leistungsteil besteht pro Phase aus zwei abschaltbaren Leistungshalbleitern und zwei Freilaufdioden. Durch Einschalten des oberen oder des unteren Halbleiterschalters wird der Ausgang mit der positiven oder der negativen Spannung +U, -U des Zwischenkreises verbunden. In dreiphasiger Ausführung wird diese Anordnung als 6-Puls-Brücke bezeichnet.

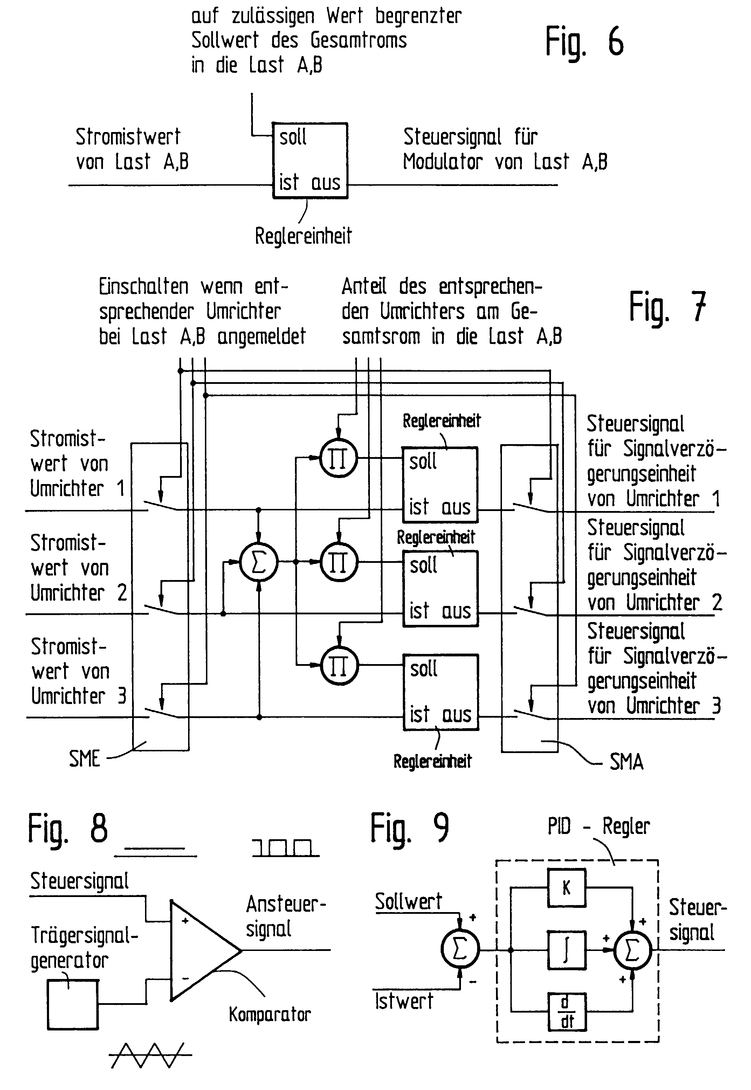

Figur 6 zeigt ein Blockschaltbild einer Phase eines in der Umrichteranlage der Figur 2 eingesetzten dreiphasigen Gesamtstromreglers 63, 73. Der Gesamtstromregler hat als Eingangssignal von der Steuerung FPM den auf den zulässigen Wert begrenzten Sollwert des Gesamtstromes in die betreffende Last A, B und vom Strommessglied 62, 72 den Istwert des Gesamtstroms in die betreffende Last A, B. Als Ausgangssignal liefert er das Steuersignal für den Modulator 64, 74 der betreffenden Last A, B. Bei allen Signalen handelt es sich um Analogsignale. Der Gesamtstromregler 63, 73 besteht im wesentlichen je Phase aus einer Reglereinheit gemäss Fig. 9. Die Aufgabe des Reglers ist es, aufgrund des Soll- und Istwertes ein Steuersignal zu bilden, derart dass im geschlossenen Regelkreis Soll- und Istwert möglichst gut übereinstimmen.

Figur 7 zeigt ein Blockschaltbild einer Phase des in der Umrichteranlage der Figur 2 eingesetzten dreiphasigen Ausgleichsreglers 65, 75. Der Ausgleichsregler hat als Eingangssignal von der Steuerung FPM eine Angabe darüber, welche Umrichter bei der betreffenden Last A, B angemeldet sind und für die angemeldeten Umrichter eine Angabe über den von ihnen zu liefernden Anteil am Gesamtstrom. Als analoge Eingangssignale hat der Ausgleichsregler weiter von den Strommessgliedern 14, 24, 34 die Istwerte der Ströme der Umrichter. Als ebenfalls analoge Ausgangssignale liefert der Ausgleichsregler die Steuersignale für die Signalverzögerungseinheiten 11, 21, 31 der bei der entsprechenden Last A, B angemeldeten Umrichter. Der Ausgleichsregler besteht im wesentlichen aus einem Summierer Σ, welcher aus den Stromistwerten der bei der entsprechenden Last A, B angemeldeten Umrichter den Gesamtstrom in diese Last berechnet, einem Multiplizierer π für jeden Umrichter, welcher aus dem Gesamtstrom und dem vom Umrichter zu liefernden Anteil am Gesamtstrom den Sollwert des Stromes für den Umrichter berechnet und aus einer Reglereinheit für jeden Umrichter. Die Aufgabe des Reglers ist es, aufgrund des Soll- und Istwertes ein Steuersignal zu bilden, derart dass im geschlossenen Regelkreis Soll- und Istwert möglichst gut übereinstimmen.

Figur 8 zeigt ein Blockschaltbild einer Phase des in der Umrichteranlage der Figur 2 eingesetzten dreiphasigen Modulators 64, 74. Der Modulator hat als Eingangssignal das modulierende Steuersignal des Gesamtstromreglers 63, 73. Dieses Signal ist ein Analogsignal. Das Ausgangssignal des Modulators ist das Ansteuersignal für den Umrichter. Es handelt sich um ein Logiksignal. Logisch 0 bedeutet, dass der untere Halbleiterschalter der 6-Puls-Brücke 13, 23, 33 eingeschaltet ist, logisch 1, dass der obere Halbleiterschalter der 6-Puls-Brücke 13, 23, 33 eingeschaltet ist. Die Aufgabe des Modulators ist es, aus dem analogen Steuersignal das Ansteuersignal in der Form eines Logiksignals für die am Modulator angeschlossenen Umrichter zu erzeugen.

Figur 9 zeigt ein Blockschaltbild einer in den Reglern der Figuren 6 und 7 eingesetzten Reglereinheit. Die Reglereinheit hat als Eingangssignal den Soll- und den Istwert der Regelgrösse und liefert als Ausgangssignal ein Steuersignal. Bei allen Signalen handelt es sich um Analogsignale. Die Aufgabe der Reglereinheit ist es, aufgrund des Soll- und Istwertes ein Steuersignal zu bilden, derart dass im geschlossenen Regelkreis Soll- und Istwert möglichst gut übereinstimmen. Die Reglereinheit besteht beispielsweise aus einem PID-Regler mit einem proportionalen Teil K, einem integrierenden Teil ∫, einem differenzierenden Teil d/dt und einem summierenden Teil Σ.

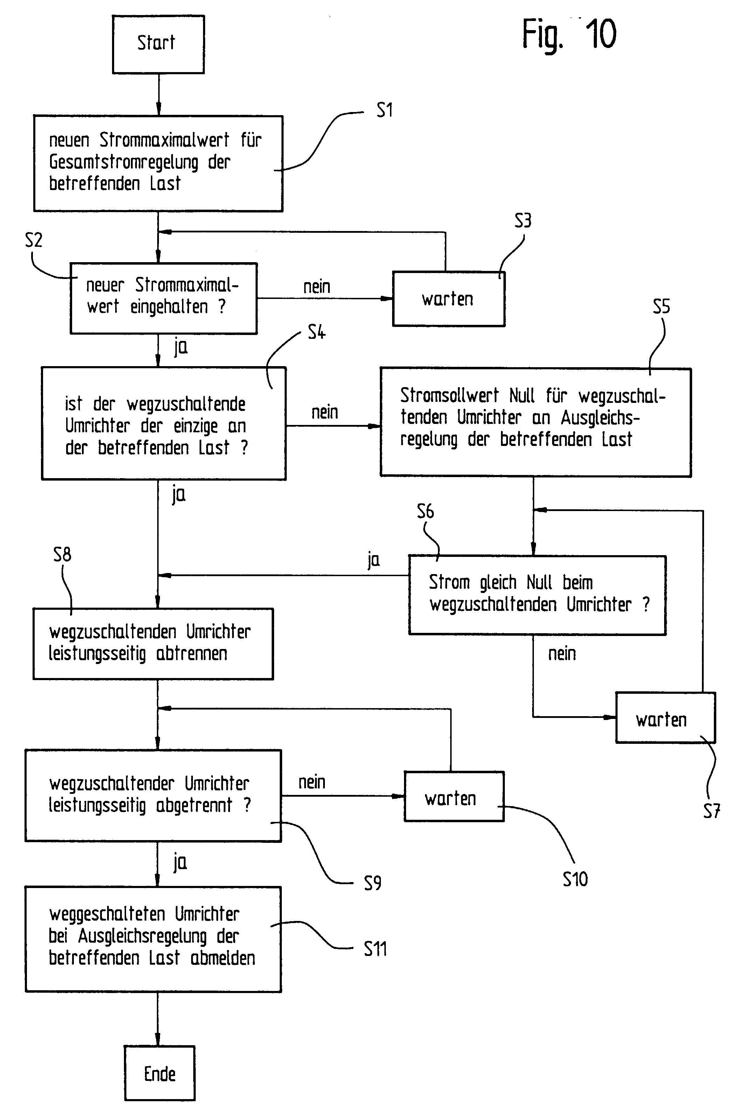

Figur 10 zeigt ein Flussdiagramm zur Darstellung eines Wegschaltvorganges eines Umrichters von einer Last. Beim Start des Flussdiagrammes wird davon ausgegangen, dass sich das Umrichtersystem in einem üblichen Betriebszustand befindet, und dass der wegzuschaltende Umrichter auch tatsächlich an einer Last angeschlossen ist. Die Stellungen der ansteuerseitigen und der leistungsseitigen Schalter müssen übereinstimmen, d.h. jeder Umrichter ist mit dem zu jener Last gehörenden Modulator verbunden, an welche er angeschlossen ist. Falls ein Umrichter an keine Last angeschlossen ist, so spielt es keine Rolle, ob und mit welchem Modulator der Umrichter verbunden ist. Parallelgeschaltete Umrichter sind ausgleichsgeregelt. Die Strommaximalwerte der Gesamtstromregler sind so gewählt, dass bei der angeschlossenen Anzahl Umrichter die Umrichter nicht überlastet werden. Falls an den Gesamtstromregler keine Umrichter angeschlossen sind, so soll der Gesamtstromregler Null als Strommaximalwert haben.

Im Schritt S1 bestimmt die Steuerung FPM den neuen Strommaximalwert für den Gesamtstromregler der Last, an die der wegzuschaltende Umrichter angeschlossen ist. In den Schritten S2 und S3 wird geprüft, ob der neue Strommaximalwert erreicht ist und eingehalten wird. Die von den Schritten S2 und S3 gebildete Schlaufe wird solange durchlaufen, bis ein positives Prüfungsergebnis vorliegt. Dann wird zum Schritt S4 übergegangen, in dem geprüft wird, ob lediglich der wegzuschaltende Umrichter an der betreffenden Last angeschlossen ist. Falls nur der wegzuschaltende Umrichter an der betreffenden Last angeschlossen ist, wird dieser im Schritt S8 leistungsseitig von der betreffenden Last abgetrennt. Bei mehreren Umrichtern an der betreffenden Last, werden nach dem Schritt S4 die Schritte S5 ... S7 ausgeführt, in denen dem betreffenden Ausgleichsregler Stromsollwert Null für den wegzuschaltenden Umrichter vorgegeben wird und in denen mittels des betreffenden Ausgleichsreglers der Strom des wegzuschaltenden Umrichters auf Null gefahren wird. Im Schritt S9 und S10 prüft die Steuerung FPM, ob der wegzuschaltende Umrichter leistungsseitig tatsächlich abgetrennt worden ist. Im Schritt S11 wird der weggeschaltete Umrichter beim betreffenden Ausgleichsregler abgemeldet.

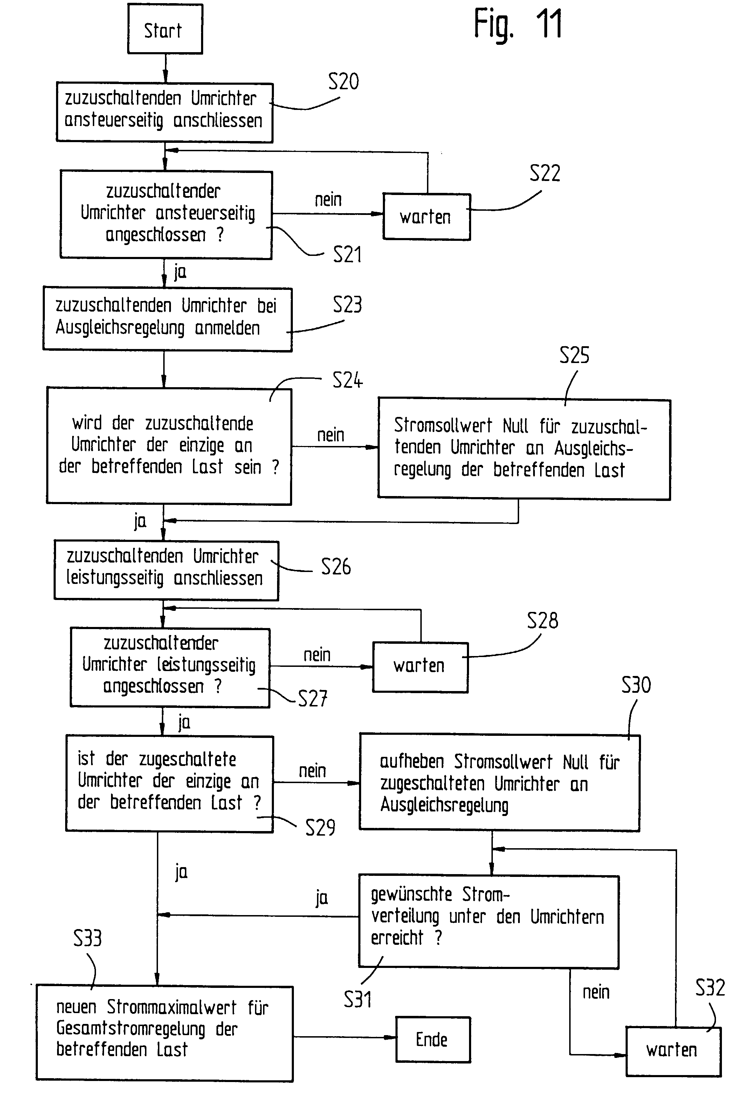

Figur 11 zeigt ein Flussdiagramm zur Darstellung eines Zuschaltvorganges eines Umrichters zu einer Last. Beim Start des Flussdiagrammes wird davon ausgegangen, dass sich das Umrichtersystem in einem üblichen Betriebszustand befindet, und dass der zuzuschaltende Umrichter auch tatsächlich an keiner Last angeschlossen ist. Die Stellungen der ansteuerseitigen und der leistungsseitigen Schalter müssen übereinstimmen, das heisst dass jeder Umrichter mit dem zu jener Last gehörenden Modulator verbunden ist, an welche er angeschlossen ist. Falls ein Umrichter an keine Last angeschlossen ist, so spielt es keine Rolle, ob und mit welchem Modulator der Umrichter verbunden ist. Parallelgeschaltete Umrichter sind ausgleichsgeregelt. Die Strommaximalwerte der Gesamtstromregler sind so gewählt, dass bei der angeschlossenen Anzahl Umrichter die Umrichter nicht überlastet werden. Falls an den Gesamtstromregler keine Umrichter angeschlossen sind, so soll der Gesamtstromregler Null als Strommaximalwert haben.

Im Schritt S20 schliesst die Steuerung FPM den zuzuschaltenden Umrichter ansteuerseitig an das System an und prüft in den Schritten S21 und S22, ob der zuzuschaltende Umrichter ansteuerseitig tatsächlich angeschlossen ist. Im Schritt S23 wird der zuzuschaltende Umrichter bei der Ausgleichsregelung angemeldet. Im Schritt S24 wird geprüft, ob noch keine Umrichter an der Last, an der der zuzuschaltende Umrichter angeschlossen wird, angeschlossen sind. Bei einem positiven Prüfungsergebnis im Schritt S24 wird der zuzuschaltende Umrichter im Schritt S26 leistungsseitig an das System angeschlossen. Bei einem negativen Prüfungsergebnis im Schritt S24 wird im Schritt S25 dem betreffenden Ausgleichsregler Stromsollwert Null für den zuzuschaltenden Umrichter vorgegeben. In den Schritten S27 und S28 prüft die Steuerung FPM, ob der zuzuschaltende Umrichter leistungsseitig am System angeschlossen ist. Im Schritt S29 wird geprüft, ob vorher keine Umrichter an der Last, an der der zugeschaltete Umrichter angeschlossen wurde, angeschlossen waren. Bei einem positiven Prüfungsergebnis im Schritt S29 wird im Schritt S33 der neue Strommaximalwert für den Gesamtstromregler der betreffenden Last bestimmt. Bei einem negativen Prüfungsergebnis im Schritt S29 hebt im Schritt S30 der betreffende Ausgleichsregler den Stromsollwert Null des zugeschalteten Umrichters auf und stellt in den Schritten S31, S32 die gewünschte Stromverteilung unter den Umrichtern ein.

## Patentansprüche

1. Verfahren zur variablen Zuteilung von in Betrieb stehenden Umrichtern (1, 2, 3) auf mindestens eine zu speisende Last (61, 71), wobei die Lastanteile der parallel geschalteten Umrichter (1, 2, 3) von einer Regelung bestimmt werden,
dadurch gekennzeichnet,
dass der Gesamtstrombedarf der Last (61, 71) den speisenden Umrichtern (1, 2, 3) mittels eines Gesamtstromreglers (63, 73) vorgegeben wird, wobei der Gesamtstrombedarf der Last (61, 71) durch den Maximalstrom der die Last speisenden Umrichter (1, 2, 3) begrenzt wird und
dass der vorgegebene Gesamtstrombedarf der Last (61, 71) mittels eines Ausgleichsreglers (65, 75) auf die die Last (61, 71) speisenden Umrichter (1, 2, 3) aufgeteilt wird, wobei der Stromanteil eines die Last (61, 71) speisenden Umrichters (1, 2, 3) durch den Maximalstrom des Umrichters (1, 2, 3) begrenzt wird.

2. Verfahren nach Anspruch 1,
dadurch gekennzeichnet,
dass beim Wegschalten eines Umrichters (1, 2, 3) von der Last (61, 71)
a) eine Steuerung (FPM) den Maximalstrom der verbleibenden die Last (61, 71) speisenden Umrichter (1, 2, 3) bestimmt und den Stromsollwert des Gesamtstromreglers (63, 73) darauf begrenzt,
b) die Steuerung (FPM) dem Ausgleichsregler (65, 75) die verbleibenden Umrichter (1, 2, 3) mitteilt und der Ausgleichsregler (65, 75) den Stromanteil des wegzuschaltenden Umrichters (1, 2, 3) auf Null setzt,
c) die Steuerung (FPM) den wegzuschaltenden Umrichter (1, 2, 3) leistungsseitig von der Last (61, 71) abtrennt und
d) die Steuerung (FPM) den wegzuschaltenden Umrichter (1, 2, 3) beim Ausgleichsregler (65, 75) abmeldet.

3. Verfahren nach Anspruch 1,
dadurch gekennzeichnet,
dass beim Zuschalten eines Umrichters (1, 2, 3) zu der Last (61, 71)
a) die Steuerung (FPM) den zuzuschaltenden Umrichter (1, 2, 3) ansteuerseitig an den Modulator (64, 74) des Gesamtstromreglers (63, 73) der Last (61, 71) anschliesst,
b) die Steuerung (FPM) dem Ausgleichsregler (65, 75) den zuzuschaltenden Umrichter (1, 2, 3) mitteilt und der Ausgleichsregler (65, 75) den Stromanteil des zuzuschaltenden Umrichters (1, 2, 3) auf Null setzt,
c) die Steuerung (FPM) den zuzuschaltenden Umrichter (1, 2, 3) leistungsseitig an die Last (61, 71) anschliesst,
d) der Ausgleichsregler (65, 75) den Stromanteil des zugeschalteten Umrichters (1, 2, 3) auf einen Betriebswert setzt, wobei der Betriebswert durch den Maximalstrom des zugeschalteten Umrichters (1, 2, 3) begrenzt wird und
e) die Steuerung (FPM) den Maximalstrom der die Last (61, 71) speisenden Umrichter 1, 2, 3) bestimmt und den Stromsollwert für den Gesamtstromregler (63, 73) darauf begrenzt.

4. Schaltungsanordnung zur Durchführung des Verfahrens nach den vorhergehenden Ansprüchen mit parallel geschalteten aus einem Gleichspannungszwischenkreis (+U, -U) gespeisten Umrichtern (1, 2, 3), deren Stromsollwerte von einer Regelung bestimmt werden,
dadurch gekennzeichnet,
dass die Umrichter (1, 2, 3) ansteuerseitig mit einem Eingangsverteiler (4) mit Schaltmitteln (41, 42, 43, 44, 45, 46) und leistungsseitig mit einem Ausgangsverteiler (5) mit Schaltmitteln (51, 52, 53, 54, 55, 56) verbunden sind, die mittels einer Steuerung (FPM) gesteuert werden,
dass am Ausgangsverteiler (5) mindestens eine Last (61, 71) angeschlossen ist, wobei zur Erfassung des Laststromes je Last (61, 71) ein Strommessglied (62, 72) vorgesehen ist, dessen Messwert einem je Last (61, 71) vorgesehenen Gesamtstromregler (63, 73) als Gesamtstromistwert zugeführt wird,
dass der Gesamtstromregler (63, 73) ausgangsseitig mit einem Modulator (64, 74) verbunden ist, wobei der Gesamtstromregler (63, 73) aus einem von der Steuerung (FPM) vorgegebenen Gesamtstromsollwert und dem Gesamtstromistwert der Last (61, 71) ein an den Eingang des Modulators (64, 74) angeschlossenes Steuersignal erzeugt und ein Ansteuersignal am Ausgang des Modulators (64, 74) mittels Eingangsverteiler (4) mindestens einem Umrichter (1, 2, 3) zugeführt wird und
dass zur Lastaufteilung innerhalb der Umrichter (1, 2, 3) je Last (61, 71) ein Ausgleichsregler (65, 75) vorgesehen ist, der aus einem mittels Strommessgliedern (14, 24, 34) erfassten Stromistwert der der Last (61, 71) zugeteilten Umrichter (1, 2, 3) und einem von der Steuerung (FPM) vorgegebenen Stromanteil des Umrichters (1, 2, 3) am Gesamtstrom der Last (61, 71) ein Steuersignal erzeugt, welches dem Umrichter (1, 2, 3) zugeführt wird.

5. Schaltungsanordnung nach Anspruch 4,
dadurch gekennzeichnet,
dass das Ansteuersignal am Ausgang des Modulators (64, 74) mittels Eingangsverteiler (4) und das Steuersignal am Ausgang des Ausgleichsreglers (65, 75) mindestens einer Signalverzögerungseinheit (11, 21, 31) zugeführt werden.

6. Schaltungsanordnung nach den Ansprüchen 4 und 5,
dadurch gekennzeichnet,
dass der Ausgleichsregler (65, 75) von der Steuerung (FPM) gesteuerte Schaltmittel (SME) aufweist, die den Stromistwert der der Last (A, B) zugeteilten Umrichter (1, 2, 3) einem Summierer (Σ) und einer Reglereinheit zuführen,
dass je Umrichter (1, 2, 3) ein Multiplizierer (π) vorgesehen ist, der aus dem Ausgangssignal des Summierers (Σ) und dem von der Steuerung (FPM) vorgegebenen Stromanteil des Umrichters (1, 2, 3) ein der Reglereinheit zugeführtes Sollwertsignal erzeugt und
dass Schaltmittel (SMA) das aus dem Sollwertsignal und dem Stromistwert gebildete Steuersignal der Reglereinheit der Signalverzögerungseinheit (11, 21, 31) zuführen.

7. Schaltungsanordnung nach den Ansprüchen 4 bis 6,
dadurch gekennzeichnet,
dass der Gesamtstromregler (63, 73) und die Reglereinheit des Ausgleichsreglers (65, 75) einen proportionalen Teil (K), einen integrierenden Teil (∫), einen differenzierenden Teil (d/dt) und einen summierenden Teil (Σ) aufweist.

8. Schaltungsanordnung nach den Ansprüchen 4 bis 6,
dadurch gekennzeichnet,
dass der Modulator (64, 74) einen Komparator aufweist, der aus dem Steuersignal des Gesamtstromreglers (63, 73) und einem Trägersignal ein pulsförmiges Ansteuersignal erzeugt, das an die Signalverzögerungseinheit (11, 21, 31) angeschlossen ist.

9. Schaltungsanordnung nach den Ansprüchen 4 bis 6,
dadurch gekennzeichnet,
dass die Signalverzögerungseinheit (11, 21, 31) einen unipolar/bipolar Wandler, einen Integrator mit Begrenzer, einen Invertierer mit Begrenzer und einen Komparator aufweist, die die Flanken des Ansteuersignales des Modulators (64, 74) je nach Steuersignal des Ausgleichsreglers (65, 75) verschieben.

10. Schaltungsanordnung nach den Ansprüchen 4 bis 6,
dadurch gekennzeichnet,
dass das Ansteuersignal der Signalverzögerungseinheit (11, 21, 31) an ein Totzeitglied für den oberen Schalter und an ein Totzeitglied für den unteren Schalter einer 6-Puls-Brücke (13, 23, 33) angeschlossen ist, wobei die Totzeitglieder Bestandteil sind einer Ansteuereinheit (12, 22, 32) mit je Schalter einer Gateunit zur Potentialtrennung und Verstärkung der Schaltersignale.

## Claims

1. Method for the variable allocation of static inverters (1, 2, 3), which are in operation, to at least one load (61, 71), which is to be fed, wherein the load shares of the parallelly connected static inverters (1, 2, 3) are determined by a regulation, characterised thereby, that the total current requirement of the load (61, 71) is preset for the feeding of static inverters (1, 2, 3) by means of a total current regulator (63, 73), wherein the total current requirement of the load (61, 71) is limited by the maximum current of the static inverters (1, 2, 3) feeding the load, and that the preset total current requirement of the load (61, 71) is divided up by means of an equalising regulator (65, 75) over the static inverters (1, 2, 3) feeding the load (61, 71), wherein the current share of one static inverter (1, 2, 3) feeding the load (61, 71) is limited by the maximum current of the static inverter (1, 2, 3).

2. Method according to claim 1, characterised thereby, that on switching one static inverter (1, 2, 3) away from the load (61, 71),
a) a control (FPM) ascertains the maximum current of the remaining static inverters (1, 2, 3) feeding the load (61, 71) and limits the current target value of total current regulators (63, 73) thereto,
b) the control (FPM) communicates the remaining static inverters (1, 2, 3) to the equalising regulator (65, 75) and the equalising regulator (65, 75) sets the current share of the static inverter (1, 2, 3), which is to be switched away, to zero,
c) the control (FPM) separates the static inverter (1, 2, 3), which is to be switched away, from the load (61, 71) at the power side and
d) the control (FPM) reports the static inverter (1, 2, 3), which is to be switched away, off at the equalising regulator (65, 75).

3. Method according to claim 1, characterised thereby, that on switching one static inverter (1, 2, 3) to the load (61, 71),
a) the control (FPM) connects the static inverter (1, 2, 3), which is to be switched in, at the drive side to the modulator (64, 74) of the total current regulator (63, 73) of the load (61, 71),
b) the control (FPM) communicates the static inverter (1, 2, 3), which is to be switched in, to the equalising regulator (65, 75) to the equalising regulator (65, 75) and the equalising regulator (65, 75) sets the current share of the static inverter (1, 2, 3), which is to be switched in, to zero,
c) the control (FPM) connects the static inverter (1, 2, 3), which is to be switched in, to the load (61, 71) at the power side,
d) the equalising regulator (65, 75) sets the current share of the static inverter (1, 2, 3), which is switched in, to an operational value, wherein the operational value is limited by the maximum current of the static inverter (1, 2, 3), which is switched in, and
e) the control (FPM) ascertains the maximum current of the static inverters (1, 2, 3) feeding the load (61, 71) and limits the current target value of the total current regulator (63, 73) thereto.

4. Circuit arrangement for the performance of the method according to the preceding claims with parallelly connected static inverters (1, 2, 3) which are fed from a direct current intermediate circuit (+U, -U) and the current target values of which are determined by a regulation, characterised thereby, that the static inverters (1, 2, 3) are connected at the drive side with an input distributor (4) with switching means (41, 42, 43, 44, 45, 46) and at the power side with an output distributor (5) with switching means (51, 52, 53, 54, 55, 56), which are controlled by means of a control (FPM), that at least one load (61, 71) is connected to the output distributor (5), wherein a current measuring member (62, 72), the measurement value of which is fed as total current actual value to a total current regulator (63, 73) provided for each load (61, 71), is provided for each load (61, 71) for the detection of the load current, that the total current regulator (63, 73) is connected at the output side with a modulator (64, 74), wherein the total current regulator (63, 73) produces a control signal, which is connected to the input of the modulator (64, 74), from a total current target value preset by the control (FPM) and the total current actual value of the load (61, 71) and a drive signal at the output of the modulator (64, 74) is fed to at least one static inverter (1, 2, 3) by means of the input distributor (4) and that an equalising regulator (65, 75), which from an actual current value, which is detected by means of current measuring members (14, 24, 34), of the static inverters (1, 2, 3) allocated to the load (61, 71) and from a current share, which is preset by the control (FPM), of the static inverter (1, 2, 3) in the total current of the load (61, 71), produces a control signal which is fed to the static inverter (1, 2, 3), is provided for each load (61, 71) for the load division within the static inverters (1, 2, 3).

5. Circuit arrangement according to claim 4, characterised thereby, that the drive signal at the output of the modulator (64, 74) is fed, by means of the input distributor (4), and the control signal at the output of the equalising regulator (65, 75) is fed each to at least one signal delay unit (11, 21, 31).

6. Circuit arrangement according to the claims 4 and 5, characterised thereby, that the equalising regulator (65, 75) displays switching means (SME), which are controlled by the control (FPM) and which feed the actual current value of the static inverters (1, 2, 3), which are allocated to the load (A, B), to a summator (Σ) and a regulator unit, that a multiplier (π), which produces a target value signal, which is fed to the regulator unit, from the output signal of the summator (Σ) and the current share, which is preset by the control (FPM), of the static inverter (1, 2, 3), is provided for each static inverter (1, 2, 3) and that switching means (SMA) feed the control signal, which is formed from the target value signal and the actual current value, to the regulator unit of the signal delay unit (11, 21, 31).

7. Circuit arrangement according to the claims 4 to 6, characterised thereby, that the total current regulator (63, 73) and the regulator unit of the equalising regulator (65, 75) displays a proportional part (K), an integrating part (∫), a differentiating part (d/dt) and a summating part (Σ).

8. Circuit arrrangement according to the claims 4 to 6, characterised thereby, that the modulator (64, 74) displays a comparator which from the control signal of the total current regulator (63, 73) and a carrier signal produces a pulse-shaped drive signal which is connected to the signal delay unit (11, 21, 31).

9. Circuit arrangement according to the claims 4 to 6, characterised thereby, that the signal delay unit (11, 21, 31) displays a unipolar/bipolar converter, an integrator with limiter, an inverter with limiter and a comparator, which shift the flanks of the drive signal of the modulator (64, 74) according to the control signal of the equalising regulator (65, 75).

10. Circuit arrangement according to the claims 4 to 6, characterised thereby, that the drive signal of the signal delay unit (11, 21, 31) is connected to a dead-time member for the upper switch and to a dead time member for the lower switch of a 6-pulse bridge (13, 23, 33), wherein the dead-time members are components of a drive unit (12, 22, 32) with a respective gate unit, for potential separation and amplification of the switch signals, for each switch.

## Revendications

1. Procédé pour l'attribution variable de convertisseurs de fréquence (1, 2, 3) en marche à au moins une charge à alimenter (61, 71), les parts de charge des convertisseurs (1, 2, 3) montés en parallèle étant définies par une régulation,
caractérisé en ce que les besoins de courant de la charge (61, 71) sont imposés aux convertisseurs alimentant (1, 2, 3) à l'aide d'un régulateur de courant total (63, 73), les besoins de courant total de la charge (61, 71) étant limités par le courant maximum des convertisseurs (1, 2, 3) qui alimentent la charge, et
en ce que les besoins de courant total de la charge (61, 71) qui sont imposés sont répartis à l'aide d'un régulateur de compensation (65, 75) sur les convertisseurs (1, 2, 3) qui alimentent la charge, la part de courant d'un convertisseur (1, 2, 3) alimentant la charge (61, 71) étant limitée par le courant maximum du convertisseur (1, 2, 3).

2. Procédé selon la revendication 1, caractérisé en ce que lors de la déconnexion entre un convertisseur (1, 2, 3) et la charge (61, 71),
a) une commande (FPM) définit le courant maximum des convertisseurs restants (1, 2, 3) qui alimentent la charge (61, 71) et limite à ce courant maximum la valeur de courant théorique du régulateur de courant total (63, 73),
b) la commande (FPM) communique au régulateur de compensation (65, 75) les convertisseurs restants (1, 2, 3), et le régulateur de compensation (65, 75) règle la part de courant du convertisseur (1, 2, 3) sur zéro,
c) la commande (FPM) sépare de la charge, côté puissance, le convertisseur (1, 2, 3) à déconnecter et
d) la commande (FPM) retire du régulateur de compensation (65, 75) le convertisseur (1, 2, 3) à déconnecter.

3. Procédé selon la revendication 1, caractérisé en ce que lors de la connexion d'un convertisseur (1, 2, 3) à la charge (61, 71),
a) la commande (FPM) raccorde au modulateur (64, 74) du régulateur de courant total (63, 73) de la charge (61, 71), côté déclenchement, le convertisseur (1, 2, 3) à connecter,
b) la commande (FPM) communique au régulateur de compensation (65, 75) le convertisseur à connecter, et le régulateur de compensation (65, 75) règle la part de courant du convertisseur (1, 2, 3) à connecter sur zéro,
c) la commande (FPM) raccorde à la charge (61, 71), côté puissance, le convertisseur (1, 2, 3) à connecter,
d) le régulateur de compensation (65, 75) règle la part de courant du convertisseur (1, 2, 3) à connecter sur une valeur de fonctionnement, la valeur de fonctionnement étant limitée par le courant maximum du convertisseur (1, 2, 3) à connecter, et
e) la commande définit le courant maximum des convertisseurs (1, 2, 3) qui alimentent la charge (61, 71), et limite la valeur de courant théorique pour le régulateur de courant total (63, 73).

4. Circuit pour la mise en oeuvre du procédé selon les revendications précédentes, comprenant des convertisseurs de fréquence (1, 2, 3) qui sont montés en parallèle et alimentés à partir d'un circuit intermédiaire de tension continue (+U, -U), et dont les valeurs de courant total sont définies par une régulation,
caractérisé en ce que les convertisseurs (1, 2, 3) sont reliés à un répartiteur d'entrée (4) comportant des moyens de commutation (41, 42, 43, 44, 45, 46), côté déclenchement, et à un répartiteur de sortie (5) comportant des moyens de commutation (51, 52, 53, 54, 55, 56), côté puissance, qui sont commandés à l'aide d'une commande (FPM),
en ce qu'au moins une charge (61, 71) est raccordée au répartiteur de sortie (5), étant précisé qu'il est prévu, pour enregistrer le courant de charge, pour chaque charge (61, 71), un organe ampèremètre (62, 72) dont la valeur de mesure est transmise comme valeur réelle de courant total à un régulateur de courant total (63, 73) prévu pour chaque charge (61, 71),
en ce que le régulateur de courant total (63, 73) est relié, côté sortie, à un modulateur (64, 74), étant précisé que le régulateur de courant total (63, 73) génère, à partir d'une valeur théorique de courant total prédéfinie par la commande (FPM) et à partir de la valeur réelle de courant total de la charge (61, 71), un signal de commande raccordé à l'entrée du modulateur (64, 74), et un signal de déclenchement, à la sortie du modulateur (64, 74), est transmis à l'aide du répartiteur d'entrée (4) à au moins un convertisseur (1, 2, 3), et
en ce que pour la répartition de charge, il est prévu à l'intérieur des convertisseurs (1, 2, 3), pour chaque charge (61, 71), un régulateur de compensation (65, 75) qui, à partir d'une valeur de courant réelle des convertisseurs (1, 2, 3) attribués à la charge (61, 71) qui est enregistrée à l'aide d'organes ampèremètres (14, 24, 34), et à partir d'une part de courant du convertisseur par rapport au courant total de la charge (61, 71), qui est prédéfinie par la commande (FPM), génère un signal de commande qui est transmis au convertisseur (1, 2, 3).

5. Circuit selon la revendication 4, caractérisé en ce que le signal de déclenchement est transmis à l'aide du répartiteur d'entrée (4), à la sortie du modulateur (64, 74), à au moins une unité de retardement de signaux (11, 21, 31), ainsi que le signal de commande, à la sortie du régulateur de compensation (65, 75).

6. Circuit selon les revendications 4 et 5, caractérisé en ce que le régulateur de compensation (65, 75) comporte des moyens de commutation (SME) commandés par la commande (FPM), qui transmettent la valeur de courant réelle des convertisseurs (1, 2, 3) attribués à la charge (A, B) à un additionneur (Σ) et à une unité de régulation,
en ce qu'il est prévu pour chaque convertisseur (1, 2, 3) un multiplicateur (π) qui, à partir du signal de sortie de l'additionneur (Σ) et de la part de courant du convertisseur (1, 2, 3) prédéfinie par la commande (FPM), génère un signal transmis à l'unité de régulation,
et en ce que des moyens de commutation (SMA) transmettent le signal de commande formé à partir du signal de valeur théorique et de la valeur de courant réelle à l'unité de régulation de l'unité de retardement de signaux (11, 21, 31).

7. Circuit selon les revendications 4 à 6, caractérisé en ce que le régulateur de courant total (63, 73) et l'unité de régulation du régulateur de compensation (65, 75) comportent un élément proportionnel (K), un élément d'intégration (∫), un élément de différentiation (d/dt) et un élément d'addition (Σ).

8. Circuit selon les revendications 4 à 6, caractérisé en ce que le modulateur (64, 74) comporte un comparateur qui, à partir du signal de commande du régulateur de courant total (63, 73) et d'un signal porteur, génère un signal de commande en forme d'impulsion qui est raccordé à l'unité de retardement de signaux (11, 21, 31).

9. Circuit selon les revendications 4 à 6, caractérisé en ce que l'unité de retardement de signaux (11, 21, 31) comporte un transformateur unipolaire/bipolaire, un intégrateur pourvu d'un limiteur, un inverseur pourvu d'un limiteur, et un comparateur qui déplacent les flancs du signal de déclenchement du modulateur (64, 74) en fonction du signal de commande du régulateur de compensation (65, 75).

10. Circuit selon les revendications 4 à 6, caractérisé en ce que le signal de déclenchement de l'unité de retardement de signaux (11, 21, 31) est raccordé à un organe de temps mort pour le commutateur supérieur et à un organe de temps mort pour le commutateur inférieur d'un pont à 6 impulsions (13, 23, 33), les organes de temps mort faisant partie d'une unité de déclenchement (12, 22, 32) comportant un commutateur d'une unité formant porte logique pour la séparation de potentiel et l'amplification des signaux de commutateur.
